# EUROPÄISCHE PATENTSCHRIFT

(11) **EP 3 238 976 B1**
(45) Veröffentlichungstag und Bekanntmachung des Hinweises auf die Patenterteilung: **02.06.2021**
(21) Anmeldenummer: 17167451.8
(22) Anmeldetag: 21.04.2017
(51) Int. Cl.: B60L 5/32

(54) **REGELSYSTEM UND VERFAHREN ZUR REGELUNG EINER ANDRUCKKRAFT EINES SCHLEIFSTÜCKS**
CONTROL SYSTEM AND METHOD FOR REGULATING A CONTACT PRESSURE OF A SLIDING PIECE
SYSTÈME ET PROCÉDÉ DESTINÉS DE CONTRÔLE DE LA PRESSION DE CONTACT D'UN FROTTEUR

(30) Priorität: 28.04.2016 DE 102016207311
(43) Veröffentlichungstag der Anmeldung: 01.11.2017
(73) Patentinhaber: Schunk Transit Systems GmbH, 5151 Nussdorf am Haunsberg (AT)
(72) Erfinder: PACHLER, Alexander, 5020 Salzburg (AT)
(74) Vertreter: advotec.

(56) Entgegenhaltungen:
- EP-A2- 2 644 433
- DE-A1- 19 643 284
- DE-A1-102013 201 494
- DE-B- 1 084 960
- Fsg Fernsteurgerate: "Mess-und Sensortechnik Windsensor", , 30. November 2011 (2011-11-30), XP055406414, Gefunden im Internet: URL:https://www.fernsteuergeraete.de/image s/pdfs/Neu_072013/FSG-Windsensor-de_112011 .pdf [gefunden am 2017-09-13]
- Thies Clima: "The world of weather data", , 30 September 2014 (2014-09-30), XP055522176, Retrieved from the Internet: URL:https://www.thiesclima.com/db/dnl/THIE S-Katalog-Wind-d-9-2014.pdf [retrieved on 2018-11-08]

## Beschreibung

Die Erfindung betrifft ein Regelsystem und ein Verfahren zur Regelung einer Andruckkraft eines Schleifstücks eines Stromabnehmers eines Schienenfahrzeugs, wobei mittels einer Positioniervorrichtung des Stromabnehmers das daran angeordnete Schleifstück mit der Andrucckraft gegen eine Fahrleitung zur Anlage gebracht wird, wobei mittels einer Fahrtmesseinrichtung einer Messvorrichtung eines Regelsystems des Schienenfahrzeugs eine Fahrtgeschwindigkeit des Schienenfahrzeugs bestimmt wird, wobei mittels einer Regelvorrichtung des Regelsystems die Andruckkraft in Abhängigkeit der Fahrtgeschwindigkeit geregelt wird, wobei mittels einer Windmesseinrichtung der Messvorrichtung eine reale Windgeschwindigkeit (vW_{R}) relativ zum Schienenfahrzeug bestimmt wird, wobei mittels der Regelvorrichtung die Andruckkraft (F_{A}) unter Berücksichtigung der realen Windgeschwindigkeit (vW_{R}) geregelt wird, und wobei mittels der Windmesseinrichtung eine Gesamtwindgeschwindigkeit (vWges) an der Positioniervorrichtung gemessen wird, wobei die Fahrtgeschwindigkeit (vF) einer Fahrtwindgeschwindigkeit (vWF) entspricht, wobei die reale Windgeschwindigkeit (vWR) als die Differenz von der Gesamtwindgeschwindigkeit (vWges) und der Fahrtgeschwindigkeit (vF) oder der Fahrtwindgeschwindigkeit (vWF) bestimmt wird.

Derartige Regelsysteme und Verfahren sind hinreichend bekannt und werden bei Schienenfahrzeugen mit Stromabnehmern, insbesondere Zügen oder dergleichen, eingesetzt. Stromabnehmer sind regelmäßig auf einem Dach eines Schienenfahrzeugs angeordnet und umfassen eine verfahrbare Positioniervorrichtung, die als eine Schwinge, ein Pantograph oder ein Einarmsystem ausgebildet sein kann. An einem oberen Ende der Positioniervorrichtung sind ein oder mehrere Schleifstücke angeordnet, wobei die Schleifstücke im Wesentlichen aus Graphit ausgebildet sind. Die Positioniervorrichtung wird mittels eines pneumatischen oder elektrischen Antriebs verfahren, wobei insbesondere bei Zügen überwiegend pneumatische Antriebe zum Einsatz kommen. Über dem pneumatischen Antrieb, der über einen oder mehrere Aktoren verfügen kann, wird das Schleifstück mit einer Andruckkraft gegen eine Fahrleitung bzw. einen Fahrdraht oberhalb des Schienenfahrzeugs gedrückt. Dabei muss eine Andruckkraft so groß sein, dass das Schleifstück während einer Fahrt des Schienenfahrzeugs nicht von der Fahrleitung getrennt wird bzw. abhebt, da dies zu einem unerwünschten Funkenüberschlag zwischen Fahrleitung und Schleifstück führen kann, was wiederum einen schnellen Verschleiß des Schleifstücks begünstigt oder eine Fahrtunterbrechung zur Folge haben kann. Daher wird stets die Andrucckraft des Schleifstücks an die Fahrleitung in Abhängigkeit einer Fahrtgeschwindigkeit des Schienenfahrzeugs geregelt. Unter der Andruckkraft wird hier eine orthogonal zur Längserstreckung der Fahrleitung wirkende Kraft, die von dem Schleifstück auf die Fahrleitung ausgeübt wird, verstanden.

Schienenfahrzeuge verfügen weiter auch über eine Fahrtmesseinrichtung zur Messung einer Fahrtgeschwindigkeit des Schienenfahrzeugs. Diese Fahrtgeschwindigkeit wird zur Regelung der Andruckkraft mittels einer Regelvorrichtung eines Regelsystems des Schienenfahrzeugs genutzt. Wenn das Schienenfahrzeug über einen pneumatischen Antrieb der Positioniervorrichtung verfügt, kann mittels eines sogenannten Proportionaldruckreglers ein Druck eines Aktors auf die Positioniervorrichtung, und damit eine Andruckkraft des Schleifstücks auf die Fahrleitung in Abhängigkeit der Fahrtgeschwindigkeit so geregelt werden, dass mit steigender Fahrtgeschwindigkeit die Andruckkraft erhöht wird. So kann verhindert werden, dass sich das Schleifstück auch bei hohen Geschwindigkeiten von der Fahrleitung in unerwünschter Weise löst. Unter hohen Geschwindigkeiten werden Fahrtgeschwindigkeiten > 100 km/h verstanden.

Nachteilig bei dem bekannten Verfahren ist jedoch, dass mit steigender Fahrtgeschwindigkeit des Schienenfahrzeugs ein Fahrtwind mit einer der Fahrtgeschwindigkeit entsprechenden Fahrtwindgeschwindigkeit auf den Stromabnehmer bzw. das Schleifstück einwirkt und aufgrund aerodynamischer Effekte das Schleifstück an die Fahrleitung andrückt. D.h., mit steigender Fahrtwindgeschwindigkeit wird eine Andruckkraft um eine Fahrtwindgeschwindigkeit-Kraftkomponente erhöht. Je höher die Andruckkraft des Schleifstücks auf die Fahrleitung ausgebildet ist, desto höher ist jedoch auch ein Abrieb des aus Graphit ausgebildeten Schleifstücks und damit ein Verschleiß desselben. Ein Verschleiß des Schleifstücks wird noch einmal wesentlich erhöht, wenn ein Schienenfahrzeug bzw. Zug mit hoher Geschwindigkeit einen Tunnel durchfährt. Neuere Tunnel können mit einer Länge von vielen Kilometern und mit einer einzelnen Tunnelröhre für alleine ein Gleis ausgebildet sein. Wenn ein Zug mit hoher Geschwindigkeit eine derartige Tunnelröhre durchfährt, wird Luft vor dem Zug verdichtet und strömt mit erhöhter Geschwindigkeit an dem Zug entlang. Eine Windgeschwindigkeit kann dann so weit erhöht werden, dass sich eine um bis zu 50 % vergrößerte Gesamtwindgeschwindigkeit bei gleichbleibender Fahrtgeschwindigkeit in dem Tunnel ergibt. Schleifstücke von Zügen, die lange Tunnel durchfahren, sind daher ebenfalls einem erhöhten Verschleiß unterworfen.

Aus der EP 2 644 433 A2 ist ein Stromabnehmer an einem Fahrzeug bekannt, mit dem ein Schleifstück an einer Fahrleitung kontaktiert wird. Insbesondere soll eine Andruckkraft des Schleifstücks an der Fahrleitung mittels einer Regeleinheit und Sensoren geregelt werden. Sogenannte Sensormittel können einen Geschwindigkeitssensor zur Messung einer Fahrtgeschwindigkeit, einen Windsensor zur Messung einer Windgeschwindigkeit und weitere Sensoren umfassen. Mittels des Sensors zur Messung der Windgeschwindigkeit soll ein Seiten- und Gegenwind gemessen werden, da dadurch eine Lage der Fahrleitung beeinflusst werden kann.

Aus der DE 196 43 284 A1 geht ebenfalls ein Stromabnehmer beziehungsweise ein Verfahren zur Regelung einer Andruckkraft hervor, wobei der Stromabnehmer über eine Regelung verfügt, mittels der eine Schwankung der Andruckkraft vermindert werden soll. Dazu ist ein piezoelektronischer Sensor oder ein Beschleunigungssensor an der Schleifleiste vorgesehen, mit dem die Schwankung der Andruckkraft detektiert werden soll.

Die DE 10 2013 201 494 A1 betrifft ein System zur Diagnose eines Betriebszustandes eines Schienenfahrzeugs, wobei vorgesehen ist, Messwerte von Schienenfahrzeugen in einem zentralen Kontrollzentrum zusammenzuführen, datentechnisch zu verarbeiten und zu speichern. Unter anderem können auch das Wetter betreffende Messwerte von einem Schienenfahrzeug erfasst werden Die DE1084960 betrifft eine Einrichtung zur Messung absoluter Geschwindigkeiten Die Erfindung betrifft eine Einrichtung zur Messung des Betrages und der Richtung der wahren Geschwindigkeit eines Wasser- oder Luftfahrzeuges bzw. der Komponenten der wahren Geschwindigkeit parallel und senkrecht zur Fahrzeuglängsachse.

Aufgabe der Erfindung ist es daher, ein Verfahren zur Regelung einer Andruckkraft eines Schleifstücks sowie ein Regelsystem für einen Stromabnehmer vorzuschlagen, das eine Standzeit eines Schleifstücks verlängert.

Diese Aufgabe wird durch ein Verfahren mit den Merkmalen des Anspruchs 1 und ein Regelsystem mit den Merkmalen des Anspruchs 10 gelöst.

Bei dem erfindungsgemäßen Verfahren zur Regelung einer Andruckkraft (F_{A}) eines Schleifstücks eines Stromabnehmers eines Schienenfahrzeugs, wird mittels einer Positioniervorrichtung des Stromabnehmers das daran angeordnete Schleifstück mit der Andruckkraft (F_{A}) gegen eine Fahrleitung zur Anlage gebracht, wobei mittels einer Fahrtmesseinrichtung einer Messvorrichtung eines Regelsystems des Schienenfahrzeugs eine Fahrtgeschwindigkeit (vF) des Schienenfahrzeugs bestimmt wird, wobei mittels einer Regelvorrichtung des Regelsystems die Andruckkraft (F_{A}) in Abhängigkeit der Fahrtgeschwindigkeit (vF) geregelt wird, wobei mittels einer Windmesseinrichtung der Messvorrichtung eine reale Windgeschwindigkeit (vW_{R}) relativ zum Schienenfahrzeug bestimmt wird, wobei mittels der Regelvorrichtung die Andruckkraft (F_{A}) unter Berücksichtigung der realen Windgeschwindigkeit (vW_{R}) geregelt wird, wobei mittels der Windmesseinrichtung eine Gesamtgeschwindigkeit (vW_{ges}) an der Positioniervorrichtung gemessen wird, wobei die Fahrtgeschwindigkeit (vF) einer Fahrtwindgeschwindigkeit (vW_{F}) entspricht, wobei die reale Windgeschwindigkeit (vW_{R}) als die Differenz von der Gesamtwindgeschwindigkeit (vW_{ges}) und der Fahrtgeschwindigkeit (vF) oder der Fahrtwindgeschwindigkeit (vW_{F}) bestimmt wird.

Bei dem erfindungsgemäßen Verfahren wird die Windmesseinrichtung verwendet, um die reale Windgeschwindigkeit (vW_{R}) zu messen. Die reale Windgeschwindigkeit (vW_{R}) ergibt sich aus den Windverhältnissen, die am Ort des Schienenfahrzeugs bzw. direkt am Stromabnehmer unabhängig von einer Fahrtwindgeschwindigkeit (vW_{F}) herrschen. Da mittels der Regelvorrichtung die Andruckkraft (F_{A}) in Abhängigkeit der Fahrtgeschwindigkeit (vF) bereits geregelt wird, wird es möglich, durch die ergänzende Messung der realen Windgeschwindigkeit (vW_{R}) die Andruckkraft (F_{A}) zu korrigieren. Durchfährt ein Schienenfahrzeug beispielsweise einen Tunnel, so würde sich die Andruckkraft (F_{A}) aufgrund der aerodynamischen Effekte in unerwünschter Weise wesentlich erhöhen. Diese Erhöhung resultiert aus der im Tunnel ebenfalls wesentlich erhöhten realen Windgeschwindigkeit (vW_{R}), die sich zur Fahrtwindgeschwindigkeit (vW_{F}) addiert. Die Regelvorrichtung verhindert in diesem Fall einen übermäßigen Anstieg der Andruckkraft (F_{A}) durch deren Anpassung an die reale Windgeschwindigkeit (vW_{R}), wodurch ein sonst erhöhter Verschleiß des Schleifstücks vermieden werden kann. Gleichwohl ist die Andruckkraft (F_{A}) immer so hoch, dass sie an die Fahrtgeschwindigkeit (vF) des Schienenfahrzeugs angepasst ist.

Erfindungsgemäß wird mittels der Windmesseinrichtung eine Gesamtgeschwindigkeit (vW_{ges}) an der Positioniervorrichtung gemessen. Dann kann beispielsweise ein einfaches Pitotrohr als Windmesseinrichtung verwendet werden, wenn die Fahrtgeschwindigkeit (vF) bzw. die Fahrtwindgeschwindigkeit (vW_{F}) bereits bekannt ist. Die Windmesseinrichtung wird dann besonders einfach ausbildbar. Auch kann die Windmesseinrichtung unmittelbar an der Positioniervorrichtung angeordnet werden, insbesondere benachbart des Schleifstücks, um die tatsächlichen Windverhältnisse bzw. Strömungsverhältnisse am Schleifstück zu ermitteln. Die Andruckkraft (F_{A}) wird dann noch genauer regelbar.

Dabei kann die Andruckkraft (F_{A}) immer proportional zur Fahrtgeschwindigkeit (vF) geregelt werden. Somit kann dann sichergestellt werden, dass die Andruckkraft (F_{A}) mit einer Erhöhung der Fahrtgeschwindigkeit (vF) ebenfalls erhöht wird und umgekehrt. Das Regelsystem kann daher beispielsweise einen bekannten Proportionaldruckregler umfassen, der einen Druck für einen pneumatischen Aktor regelt. Somit kann das Verfahren zur Regelung einer Andruckkraft (F_{A}) auch durch eine Nachrüstung von Proportionaldruckreglern mit der Regelvorrichtung ausgeführt werden.

Erfindungsgemäß entspricht die Fahrtgeschwindigkeit (vF) einer Fahrtwindgeschwindigkeit (vW_{F}), wobei die reale Windgeschwindigkeit (vW_{R}) als die Differenz von einer Gesamtwindgeschwindigkeit (vW_{ges}) und der Fahrtgeschwindigkeit (vF) oder der Fahrtwindgeschwindigkeit (vW_{F}) bestimmt wird. Die reale Windgeschwindigkeit (vW_{R}) muss dabei noch nicht einmal direkt gemessen werden, sondern kann aus Messungen der anderen Größen von der Regelvorrichtung errechnet werden. Da die Fahrtwindgeschwindigkeit (vW_{F}) gleich der Fahrtgeschwindigkeit (vF) bzw. deren negativer oder inverser Wert entsprechend -vW_{F} = vF ist, kann die Fahrtwindgeschwindigkeit (vW_{F}) einfach dadurch bestimmt werden, dass die Fahrtgeschwindigkeit (vF) gemessen wird. Eine Messung der Fahrtgeschwindigkeit (vF) erfolgt regelmäßig an jedem Schienenfahrzeug, beispielsweise an einem Rad eines Schienenfahrzeugs, so dass die Regelvorrichtung diese dann bekannte Größe einfach verarbeiten kann. Unabhängig von einer ohnehin vorhandenen Messung der Fahrtgeschwindigkeit (vF) kann die Fahrtwindgeschwindigkeit (vW_{F}) noch einmal gesondert mittels der Windmesseinrichtung gemessen werden. Eine reale Windgeschwindigkeit (vW_{R}) kann dann besonders einfach beispielsweise mittels eines Prandtl-Rohrs bestimmt werden.

Eine Fahrwindgeschwindigkeit-Kraftkomponente (F_{WFY}) kann in Abhängigkeit der Fahrtgeschwindigkeit (vF) oder einer Fahrtwindgeschwindigkeit (vW_{F}) und/oder eine Realwindgeschwindigkeit-Kraftkomponente (F_{WRY}) in Abhängigkeit der realen Windgeschwindigkeit (vW_{R}) mittels der Regelvorrichtung bestimmt werden. Die Fahrtwindgeschwindigkeit (vW_{F}) und die reale Windgeschwindigkeit (vW_{R}) wirken entgegengesetzt der Bewegungsrichtung des Schleifstücks relativ zur Fahrleitung auf das Schleifstück ein. Die reale Windgeschwindigkeit (vW_{R}) kann dabei auch eine Komponente eines seitlich auf das Schienenfahrzeug wirkenden Windes sein. Infolge aerodynamischer Wirkungen am Schleifstück ergibt sich die jeweils orthogonal zur Fahrleitung wirkende Fahrtwindgeschwindigkeit-Kraftkomponente (F_{WFY}) bzw. die Realwindgeschwindigkeit-Kraftkomponente (F_{WRY}). Diese Größen können von der Regelvorrichtung in Abhängigkeit der jeweiligen Windgeschwindigkeiten bestimmt werden. Damit wird es möglich, dass die Regelvorrichtung die Andruckkraft (F_{A}) in Abhängigkeit der vorgenannten Kraftkomponenten anpasst, um einen Verschleiß des Schleifstücks zu mindern.

Die Andruckkraft (F_{A}) kann die Summe aus der negativen Realwindgeschwindigkeit-Kraftkomponente (F_{WRY}) und der Fahrtgeschwindigkeit-Kraftkomponente (F_{AvK}) sein, wobei die Fahrtgeschwindigkeit-Kraftkomponente (F_{AvK}) mittels der Regelvorrichtung geregelt werden kann. Folglich kann dann bei der Regelung der Andruckkraft (F_{A}) alleine die für die jeweilige Geschwindigkeit des Schienenfahrzeugs vorgesehene Kraftkomponente (F_{AvK}) und die Realwindgeschwindigkeit-Kraftkomponente (F_{WRY}) berücksichtigt werden. Die Fahrtwindgeschwindigkeit-Kraftkomponente (F_{WFY}) kann dann vernachlässigt werden. Alleine durch diese Berücksichtigung der realen Windgeschwindigkeit (vW_{R}) wird es bereits möglich, einen Verschleiß des Schleifstücks wesentlich zu mindern und eine Kontaktgüte zu verbessern.

Eine Standzeit des Schleifstücks kann noch weiter verlängert werden, wenn die Andruckkraft (F_{A}) die Summe aus der Fahrtwindgeschwindigkeit-Kraftkomponente (F_{WFY}), der negativen Realwindgeschwindigkeit-Kraftkomponente (F_{WRY}) und der Fahrtgeschwindigkeit-Kraftkomponente (F_{AvK}) ist, wobei die Fahrtgeschwindigkeit-Kraftkomponente (F_{AvK}) mittels der Regelvorrichtung geregelt werden kann. Insgesamt kann dann die Andruckkraft (F_{A}) an alle die Andruckkraft beeinflussenden, aerodynamischen Kräfte angepasst werden.

Die Fahrtwindgeschwindigkeit-Kraftkomponente (F_{WFY}) und die Fahrtgeschwindigkeit-Kraftkomponente (F_{AvK}) können unter Berücksichtigung einer Höhe des Schleifstücks mittels der Regelvorrichtung bestimmt werden. Eine Höhe des Schleifstücks ist prinzipiell von dessen Verschleiß abhängig, so dass ein neues Schleifstück regelmäßig immer höher ist als ein bereits längere Zeit im Gebrauch befindliches Schleifstück, da sich hier die Höhe durch Abrieb bereits vermindert hat. Die Höhe des Schleifstücks hat jedoch auch Auswirkungen auf das aerodynamische Verhalten des Schleifstücks und damit insbesondere auf die von Windgeschwindigkeiten beeinflusste Andruckkraft (F_{A}). Die Regelvorrichtung kann nun aufgrund einer bekannten Höhe des Schleifstücks die Fahrtwindgeschwindigkeit-Kraftkomponente (F_{WFY}) und die Fahrtgeschwindigkeit-Kraftkomponente (F_{AvK}) bestimmen bzw. errechnen. Dabei kann vorgesehen sein, die Höhe des Schleifstücks in regelmäßigen Abständen mittels einer Höhenmesseinrichtung zu messen, um die Andruckkraft (F_{A}) noch genauer regeln zu können.

Mittels einer Speichereinrichtung der Regelvorrichtung kann eine Funktion von Werten der realen Windgeschwindigkeit (vW_{R}) und Werten der Realwindgeschwindigkeit-Kraftkomponente (F_{WRY}) gespeichert werden. Die Regelvorrichtung kann demnach Mittel zur Datenverarbeitung mit der Speichereinrichtung umfassen. Die in der Speichereinrichtung gespeicherte Funktion ermöglicht dann eine Zuordnung der mittels der Windmesseinrichtung bestimmten realen Windgeschwindigkeit (vW_{R}) zu einem Wert der Realwindgeschwindigkeit-Kraftkomponente (F_{WRY}). Dadurch wird die Regelung der Andruckkraft (F_{A}) noch weiter vereinfacht.

Weiter kann eine Kalibrierung der Funktion durch eine Messung der Andruckkraft (F_{A}) und einer Gesamtwindgeschwindigkeit (vW_{ges}) erfolgen. Die Andruckkraft (F_{A}) des Schleifstücks an der Fahrleitung kann beispielsweise mittels Kraftsensoren ermittelt werden, die am oder in der Nähe des Schleifstücks angeordnet sind. So kann die tatsächliche Andruckkraft in Abhängigkeit der Gesamtwindgeschwindigkeit (vW_{ges}) bestimmt werden, wobei dann jeweils die Funktion so angepasst werden kann, dass die Regelvorrichtung stets die gewünschte Andruckkraft (F_{A}), die an die Fahrtgeschwindigkeit (vF) angepasst ist, einstellt. Durch die Kalibrierung wird es möglich, das Verfahren auf beliebige Arten und Modelle von Schienenfahrzeugen bzw. Stromabnehmer anzuwenden, da dann die jeweils verschiedenen Strömungsverhältnisse an den Schienenfahrzeugen berücksichtigt werden können.

Mittels einer Höhenmesseinrichtung der Messvorrichtung kann eine Höhe des Schleifstücks fortlaufend gemessen werden, wobei mittels der Regelvorrichtung die Andruckkraft unter Berücksichtigung der Höhe geregelt wird. Die Höhenmesseinrichtung kann dabei beispielsweise eine Kamera sein, die das Schleifstück erfasst oder auch ein Sensor, der am oder innerhalb des Schleifstücks verbaut ist. Wesentlich ist, dass die Höhe des Schleifstücks während eines Betriebs fortlaufend gemessen werden kann, so dass die Andruckkraft (F_{A}) stets an eine sich durch Abrieb des Schleifstücks ständig verändernde Höhe desselben mittels der Regelvorrichtung angepasst werden kann. Neben der Regelung der Andruckkraft (F_{A}) kann dann mittels der Höhenmesseinrichtung auch ein Absenken des Schleifstücks initiiert werden, wenn das Schleifstück eine minimale Höhe unterschreitet, um eine Beschädigung der Fahrleitung zu verhindern.

Bei dem erfindungsgemäßen Regelsystem für einen Stromabnehmer für Schienenfahrzeuge, weist der Stromabnehmer eine verfahrbare Positioniervorrichtung und zumindest ein daran angeordnetes Schleifstück auf, wobei mittels der Positioniervorrichtung das Schleifstück mit einer Andruckkraft (F_{A}) gegen eine Fahrleitung zur Anlage bringbar ist, wobei das Regelsystem eine Messvorrichtung und eine Regelvorrichtung umfasst, wobei die Messvorrichtung eine Fahrtmesseinrichtung zur Bestimmung einer Fahrtgeschwindigkeit (vF) eines Schienenfahrzeugs aufweist, wobei mittels der Regelvorrichtung die Andruckkraft (F_{A}) in Abhängigkeit der Fahrtgeschwindigkeit (vF) regelbar ist, wobei die Messvorrichtung eine Windmesseinrichtung zur Bestimmung einer realen Windgeschwindigkeit (vW_{R}) relativ zum Schienenfahrzeug aufweist, wobei mittels der Regelvorrichtung die Andruckkraft (F_{A}) unter Berücksichtigung der realen Windgeschwindigkeit (vW_{R}) regelbar ist, wobei mittels der Windmesseinrichtung eine Gesamtgeschwindigkeit (vW_{ges}) an der Positioniervorrichtung messbar ist, wobei die Fahrtgeschwindigkeit (vF) einer Fahrtwindgeschwindigkeit (vW_{F}) entspricht, wobei die reale Windgeschwindigkeit (vW_{R}) als die Differenz von der Gesamtwindgeschwindigkeit (vW_{ges}) und der Fahrtgeschwindigkeit (vF) oder der Fahrtwindgeschwindigkeit (vW_{F}) bestimmbar ist. Zu den Vorteilen des erfindungsgemäßen Regelsystems wird auf die Vorteilsbeschreibung des erfindungsgemäßen Verfahrens verwiesen.

Die Windmesseinrichtung kann ein Venturi-Rohr, ein Pitotrohr, ein Prandtl-Rohr oder ein Anemometer, insbesondere ein Ultraschall Anemometer, ein thermoelektrisches Anemometer, ein thermooptisches Anemometer, ein Plattenanemometer sein. Wesentlich dabei ist, dass die Windmesseinrichtung zur Messung der realen Windgeschwindigkeit (vW_{R}) oder einer Gesamtwindgeschwindigkeit (vW_{ges}) ausgebildet sein kann. Vorzugsweise kann die Windmesseinrichtung auf einem Dach des Schienenfahrzeugs in der Nähe des Stromabnehmers oder unmittelbar an der Positioniervorrichtung benachbart dem Schleifstück angeordnet sein.

Die Windmesseinrichtung kann einen faseroptischen Sensor zur Luftgeschwindigkeitsmessung aufweisen. Der faseroptische Sensor kann dann ein thermooptisches Anemometer ausbilden. Dabei ist besonders vorteilhaft, dass der faseroptische Sensor nicht durch elektromagnetische Felder wie sie an Stromabnehmern regelmäßig vorliegen, beeinflusst werden kann. Der faseroptische Sensor kann daher auch benachbart dem Schleifstück angeordnet werden, ohne das Messergebnis durch über das Schleifstück fließende Ströme oder beispielsweise einem Funkenüberschlag verfälscht werden könnten. Auch kann der Sensor nicht wie ein Staurohr durch Verschmutzung betriebsuntauglich werden.

Die Messvorrichtung kann eine Höhenmesseinrichtung aufweisen, mittels der eine Höhe des Schleifstücks messbar ist, wobei die Höhenmesseinrichtung einen faseroptischen Sensor aufweisen kann, der innerhalb des Schleifstücks angeordnet sein kann. Der faseroptische Sensor zur Messung der Höhe des Schleifstücks ist dann ebenfalls nicht durch elektromagnetische Felder beeinflussbar. Darüber hinaus wird es mit der Höhenmesseinrichtung möglich, die Andruckkraft (F_{A}) an die tatsächliche Höhe des Schleifstücks anzupassen. Wenn der faseroptische Sensor innerhalb des Schleifstücks angeordnet ist, ist der faseroptische Sensor auch von äußeren Einflüssen, die ein Messergebnis verfälschen können, abgeschirmt.

Dabei kann ein unidirektionales Faserbündel in einer vertikalen Bohrung im Schleifstück angeordnet sein, wobei das Faserbündel die Bohrung vollständig ausfüllen kann. Der faseroptische Sensor wird dann durch das Faserbündel in der Bohrung ausgebildet. Die Bohrung kann eine Sacklochbohrung oder eine Durchgangsbohrung in dem Schleifstück sein. Bei einem Abrieb des Schleifstücks durch Kontakt mit der Fahrleitung erfolgt dann auch ein Abrieb des Faserbündels, wodurch eine Länge des Faserbündels gekürzt wird. Diese Längenänderung des Faserbündels kann detektiert werden, woraus sich eine Höhe des Schleifstücks ergibt. In dem Schleifstück können eine Vielzahl von voneinander beabstandeten Faserbündel angeordnet sein. Dadurch, dass das Faserbündel lediglich in die vertikale Bohrung eingesteckt wird, ist der faseroptische Sensor einfach zu montieren. Auch kann nach Bedarf vorgesehen sein, das Faserbündel in der Bohrung durch ein Klebermaterial zu fixieren oder zu vergießen.

Weiter kann die Fahrtmesseinrichtung unabhängig von der Windmesseinrichtung ausgebildet sein. Die Fahrtmesseinrichtung kann dann die ohnehin an einem Schienenfahrzeug ausgebildete Fahrtmesseinrichtung zur Bestimmung und Anzeige einer Fahrtgeschwindigkeit, beispielsweise für einen Fahrzeugführer, sein. Es kann dann auf eine ergänzende Ausbildung einer Fahrtmesseinrichtung verzichtet werden. Gleichwohl kann mittels der Windmesseinrichtung eine Fahrtwindgeschwindigkeit (vW_{F}) gemessen werden, um ein noch genaueres Messergebnis zu erhalten.

Alternativ kann die Windmesseinrichtung die Fahrtmesseinrichtung ausbilden. Dann wird alleine durch die Windmesseinrichtung eine Fahrtgeschwindigkeit (vF) gemessen. Das Regelsystem kann dann unabhängig von einer gegebenenfalls bereits vorhandenen Fahrtmesseinrichtung eines Schienenfahrzeugs ausgebildet sein, wodurch das Regelsystem universeller an Schienenfahrzeugen einsetzbar wird.

Bei der Verwendung einer Windmesseinrichtung ist es vorgesehen, diese zur Bestimmung einer realen Windgeschwindigkeit (vW_{R}) an einem Stromabnehmer eines Schienenfahrzeugs zu verwenden. Dadurch wird es erst möglich, die reale Windgeschwindigkeit (vW_{R}) zur genauen Regelung einer Andruckkraft (F_{A}) eines Schleifstücks des Stromabnehmers des Schienenfahrzeugs mit den zuvor beschriebenen Vorteilen zu verwenden.

Weitere vorteilhafte Ausführungsformen des Regelsystems ergeben sich aus den auf den Verfahrensanspruch 1 rückbezogenen Unteransprüchen.

Nachfolgend wird eine bevorzugte Ausführungsform der Erfindung unter Bezugnahme auf die beigefügten Zeichnungen näher erläutert.

Es zeigen:
- **Fig. 1**: eine schematische Darstellung eines Stromabnehmers;
- **Fig. 2**: eine schematische Darstellung eines Schleifstücks mit Relativgeschwindigkeiten;
- **Fig. 3**: eine schematische Darstellung des Schleifstücks mit Relativkräften;
- **Fig. 4**: eine schematische Darstellung eines Regelsystems;
- **Fig. 5**: eine Darstellung eines faseroptischen Sensors.

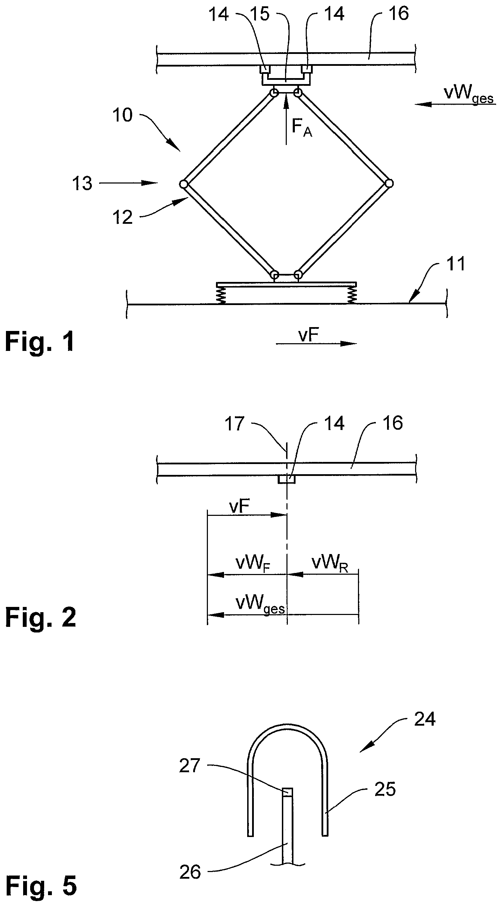

Die **Fig. 1** zeigt einen Stromabnehmer 10 auf einem Dach 11 eines hier nicht näher dargestellten Schienenfahrzeugs mit einer als Pantograph 12 ausgebildeten Positioniervorrichtung 13. An dem Pantograph 12 sind zwei Schleifstücke 14 an einer Wippe 15 quer zu einer Fahrleitung 16 angeordnet. Das Schienenfahrzeug bewegt sich mit einer Fahrtgeschwindigkeit vF relativ zur Fahrleitung 16, wobei das Schienenfahrzeug mit einer Gesamtwindgeschwindigkeit vW_{ges} parallel zur Fahrleitung 16 angeströmt wird. Die Schleifstücke 14 werden mit einer Andruckkraft F_{A} quer bzw. orthogonal zur Fahrleitung 16 an diese gedrückt. Die Andruckkraft F_{A} wird mittels einer nicht dargestellten Regelvorrichtung geregelt.

Die **Fig. 2** zeigt eine schematische Darstellung des Schleifstücks 14 an der Fahrleitung 16 mit an einer Hochachse 17 des Schleifstücks 14 eingezeichneten Vektoren. Eine Gesamtwindgeschwindigkeit vW_{ges} setzt sich aus einer Fahrtwindgeschwindigkeit vW_{F} und einer realen Windgeschwindigkeit vW_{R} zusammen. Die Fahrtwindgeschwindigkeit vW_{F} ist dabei gleich groß wie eine Fahrtgeschwindigkeit vF bzw. wirkt dieser entgegengesetzt. Die reale Windgeschwindigkeit vW_{R} entspricht daher dem Anteil eines Windes, der auf den Stromabnehmer bzw. das Schleifstück 14 wirkt, unabhängig von der Fahrtgeschwindigkeit vF. Dieser Wind kann auch negativ sein, d.h. mit der Fahrtrichtung des Schienenfahrzeugs wirken und so die Fahrtwindgeschwindigkeit vW_{F} bzw. die Gesamtwindgeschwindigkeit vW_{ges} herabsetzen.

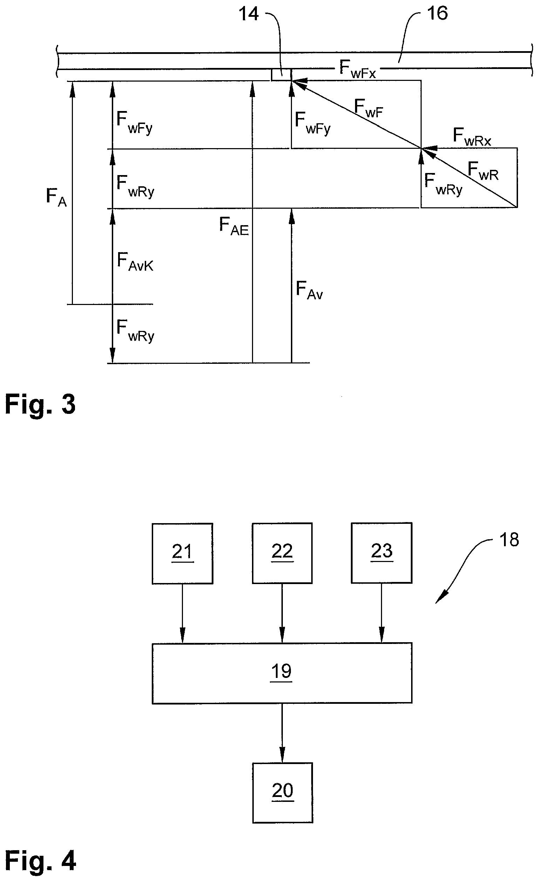

Die **Fig. 3** zeigt das Schleifstück 14 und die Fahrleitung 16 mit einem Schleifstück 14 während eines Fahrbetriebs des Schienenfahrzeugs und mit dann angreifenden Kraftvektoren. Aus der Fahrtgeschwindigkeit vF ergibt sich eine Fahrtwindgeschwindigkeit-Kraft F_{WF}, die infolge der aerodynamischen Effekte an der Positioniervorrichtung bzw. dem Schleifstück 14 quer auf das Schleifstück 14 wirkt. Die Fahrtwindgeschwindigkeit-Kraft F_{WF} unterteilt sich in Fahrtwindgeschwindigkeit-Kraftkomponenten F_{WFY} und F_{WFX}. Die reale Windgeschwindigkeit vW_{R} bewirkt ebenso eine reale Windgeschwindigkeit-Kraft F_{WR} mit Realwindgeschwindigkeit-Kraftkomponenten F_{WRY} und F_{WRX}. Die Fahrtwindgeschwindigkeit-Kraftkomponente vW_{FY} und die reale Windgeschwindigkeit-Kraftkomponente F_{WRY} wirken orthogonal zur Fahrleitung 16 auf das Schleifstück 14 und drücken es zusammen mit einer geschwindigkeitsabhängigen Andruckkraft F_{AV} gegen die Fahrleitung 16. Die geschwindigkeitsabhängige Andruckkraft F_{AV} wird dabei von einer Positioniervorrichtung mit einem Proportionaldruckregler in Abhängigkeit einer aktuellen Fahrtgeschwindigkeit vF erzeugt und mit steigender Fahrtgeschwindigkeit vF in einem proportionalen Verhältnis erhöht. Hieraus resultiert die erhöhte Andruckkraft F_{AE}, welche aufgrund der Realwindgeschwindigkeit-Kraftkomponente F_{WRY} höher ist als tatsächlich erforderlich, was wiederum zu einem erhöhten Verschleiß und damit einer verkürzten Standzeit des Schleifstücks 14 führt. Die hier nicht dargestellte Regelvorrichtung bestimmt daher die reale Windgeschwindigkeit vW_{R} und die daraus resultierende Realwindgeschwindigkeit-Kraftkomponente F_{WRY}, wobei mittels der Regelvorrichtung die reale Windgeschwindigkeit-Kraftkomponente F_{WRY} prinzipiell von der erhöhten Andruckkraft F_{AE} subtrahiert wird. Dies kann jedoch auch bereits schon bei der Ermittlung der Windgeschwindigkeit erfolgen. Wesentlich ist, dass die Andruckkraft F_{A} um den Einfluss der realen Windgeschwindigkeit-Kraftkomponente F_{WRY} korrigiert ist. Die Andruckkraft F_{A} ist folglich so hoch, dass zumindest eine für die jeweilige Fahrtgeschwindigkeit vF erforderliche Andruckkraft aufgebracht bzw. diese nicht überschritten wird.

Die **Fig. 4** zeigt den Prinzipaufbau eines Regelsystems 18 mit einer Regelvorrichtung 19 und einem Antrieb 20 einer hier nicht näher dargestellten Positioniervorrichtung. Eine Windmesseinrichtung 21, eine Fahrtmesseinrichtung 22 und eine Höhenmesseinrichtung 23 versorgen die Regelvorrichtung 19 mit Betriebsparametern, wobei die Regelvorrichtung 19 über den Antrieb 20 auf ein hier nicht dargestelltes Schleifstück eine in Abhängigkeit der Betriebsparameter ausgebildete Andrucckraft ausübt.

Die **Fig. 5** zeigt eine schematische Darstellung einer faseroptischen Sensors 24 zur Luftgeschwindigkeitsmessung. Der faseroptische Sensor 24 umfasst eine U-förmige Profilabdeckung 25 und ein unidirektionales Faserbündel 26 mit einem Sensorende 27. Eine Temperaturänderung an dem Sensorende 27 kann eine hier nicht näher dargestellte Beschichtung des Sensorendes 27 optisch verändern, so dass diese Veränderung der Beschichtung wiederum über das Faserbündel 26 mit einer hier nicht näher dargestellten Auswertevorrichtung detektiert werden kann. Die Profilabdeckung 25 dient zum Schutz des Sensorendes 27 vor unzuträglichen Umwelteinflüssen.

## Patentansprüche

1. Verfahren zur Regelung einer Andruckkraft (F_{A}) eines Schleifstücks (14) eines Stromabnehmers (10) eines Schienenfahrzeugs, wobei mittels einer Positioniervorrichtung (13) des Stromabnehmers das daran angeordnete Schleifstück mit der Andruckkraft (F_{A}) gegen eine Fahrleitung (16) zur Anlage gebracht wird, wobei mittels einer Fahrtmesseinrichtung (22) einer Messvorrichtung eines Regelsystems (18) des Schienenfahrzeugs eine Fahrtgeschwindigkeit (vF) des Schienenfahrzeugs bestimmt wird, wobei mittels einer Regelvorrichtung (19) des Regelsystems die Andruckkraft (F_{A}) in Abhängigkeit der Fahrtgeschwindigkeit (vF) geregelt wird, wobei mittels einer Windmesseinrichtung (21) der Messvorrichtung eine reale Windgeschwindigkeit (vW_{R}) relativ zum Schienenfahrzeug bestimmt wird, wobei mittels der Regelvorrichtung die Andruckkraft (F_{A}) unter Berücksichtigung der realen Windgeschwindigkeit (vW_{R}) geregelt wird,
**dadurch gekennzeichnet,**
**dass** mittels der Windmesseinrichtung eine Gesamtwindgeschwindigkeit (vW_{ges}) an der Positioniervorrichtung (13) gemessen wird, wobei die Fahrtgeschwindigkeit (vF) einer Fahrtwindgeschwindigkeit (vW_{F}) entspricht, wobei die reale Windgeschwindigkeit (vW_{R}) als die Differenz von der Gesamtwindgeschwindigkeit (vW_{ges}) und der Fahrtgeschwindigkeit (vF) oder der Fahrtwindgeschwindigkeit (vW_{F}) bestimmt wird.

2. Verfahren nach Anspruch 1,
**dadurch gekennzeichnet,**
**dass** die Andruckkraft (F_{A}) proportional zur Fahrtgeschwindigkeit (vF) geregelt wird.

3. Verfahren nach Anspruch 1 oder 2,
**dadurch gekennzeichnet,**
**dass** eine Fahrtwindgeschwindigkeit-Kraftkomponente (F_{WFY}) in Abhängigkeit der Fahrtgeschwindigkeit (vF) oder einer Fahrtwindgeschwindigkeit (vW_{F}) und/oder eine Realwindgeschwindigkeit-Kraftkomponente (F_{WRY}) in Abhängigkeit der realen Windgeschwindigkeit (vW_{R}) mittels der Regelvorrichtung (19) bestimmt wird.

4. Verfahren nach Anspruch 3,
**dadurch gekennzeichnet,**
**dass** die Andruckkraft (F_{A}) die Summe aus der negativen Realwindgeschwindigkeit-Kraftkomponente (F_{WRY}) und der Fahrtgeschwindigkeit-Kraftkomponente (F_{AvK}) ist, wobei die Fahrtgeschwindigkeit-Kraftkomponente (F_{AvK}) mittels der Regelvorrichtung (19) geregelt wird.

5. Verfahren nach Anspruch 3,
**dadurch gekennzeichnet,**
**dass** die Andruckkraft (F_{A}) die Summe aus der Fahrtwindgeschwindigkeit-Kraftkomponente (F_{WFY}), der negativen Realwindgeschwindigkeit-Kraftkomponente (F_{WRY}) und der Fahrtgeschwindigkeit-Kraftkomponente (F_{AvK}) ist, wobei die Fahrtgeschwindigkeit-Kraftkomponente (F_{AvK}) mittels der Regelvorrichtung (19) geregelt wird.

6. Verfahren nach einem der Ansprüche 3 bis 5,
**dadurch gekennzeichnet,**
**dass** die Fahrtwindgeschwindigkeit-Kraftkomponente (F_{WFY}) und die Fahrtgeschwindigkeit-Kraftkomponente (F_{AvK}) unter Berücksichtigung einer Höhe des Schleifstücks mittels der Regelvorrichtung (19) bestimmt wird.

7. Verfahren nach einem der Ansprüche 3 bis 6,
**dadurch gekennzeichnet,**
**dass** mittels einer Speichereinrichtung der Regelvorrichtung (19) eine Funktion von Werten der realen Windgeschwindigkeit (vW_{R}) und Werten der Realwindgeschwindigkeit-Kraftkomponente (F_{WRY}) gespeichert wird.

8. Verfahren nach Anspruch 7,
**dadurch gekennzeichnet,**
**dass** eine Kalibrierung der Funktion durch eine Messung der Andruckkraft (F_{A}) und einer Gesamtwindgeschwindigkeit (vW_{ges}) erfolgt.

9. Verfahren nach einem der vorangehenden Ansprüche,
**dadurch gekennzeichnet,**
**dass** mittels einer Höhenmesseinrichtung (23) der Messvorrichtung eine Höhe des Schleifstücks (14) fortlaufend gemessen wird, wobei mittels der Regelvorrichtung (19) die Andruckkraft (F_{A}) unter Berücksichtigung der Höhe geregelt wird.

10. Regelsystem für einen Stromabnehmer (10) für Schienenfahrzeuge, wobei der Stromabnehmer eine verfahrbare Positioniervorrichtung (13) und zumindest ein daran angeordnetes Schleifstück (14) aufweist, wobei mittels der Positioniervorrichtung das Schleifstück mit einer Andruckkraft (F_{A}) gegen eine Fahrleitung (16) zur Anlage bringbar ist, wobei das Regelsystem eine Messvorrichtung und eine Regelvorrichtung (19) umfasst, wobei die Messvorrichtung eine Fahrtmesseinrichtung (22) zur Bestimmung einer Fahrtgeschwindigkeit (vF) eines Schienenfahrzeugs aufweist, wobei mittels der Regelvorrichtung die Andruckkraft (F_{A}) in Abhängigkeit der Fahrtgeschwindigkeit (vF) regelbar ist, wobei die Messvorrichtung eine Windmesseinrichtung (21) zur Bestimmung einer realen Windgeschwindigkeit (vW_{R}) relativ zum Schienenfahrzeug aufweist, wobei mittels der Regelvorrichtung die Andruckkraft (F_{A}) unter Berücksichtigung der realen Windgeschwindigkeit (vW_{R}) regelbar ist,
**dadurch gekennzeichnet,**
**dass** mittels der Windmesseinrichtung eine Gesamtwindgeschwindigkeit (vW_{ges}) an der Positioniervorrichtung (13) messbar ist, wobei die Fahrtgeschwindigkeit (vF) einer Fahrtwindgeschwindigkeit (vW_{F}) entspricht, wobei die reale Windgeschwindigkeit (vW_{R}) als die Differenz von der Gesamtwindgeschwindigkeit (vW_{ges}) und der Fahrtgeschwindigkeit (vF) oder der Fahrtwindgeschwindigkeit (vW_{F}) bestimmbar ist.

11. Regelsystem nach Anspruch 10,
**dadurch gekennzeichnet,**
**dass** die Windmesseinrichtung (21) ein Venturi-Rohr, ein Pitotrohr, ein Prandtl-Rohr oder ein Anemometer, insbesondere ein Ultraschall Anemometer, ein thermoelektrisches Anemometer, thermooptisches Anemometer, Plattenanemometer, ist.

12. Regelsystem nach Anspruch 10 oder 11,
**dadurch gekennzeichnet,**
**dass** die Windmesseinrichtung (21) einen faseroptischen Sensor (24) zur Luftgeschwindigkeitsmessung aufweist.

13. Regelsystem nach einem der Ansprüche 10 bis 12,
**dadurch gekennzeichnet,**
**dass** die Messvorrichtung eine Höhenmesseinrichtung (23) aufweist, mittels der eine Höhe des Schleifstücks (14) messbar ist, wobei die die Höhenmesseinrichtung einen faseroptischen Sensor aufweist, der innerhalb des Schleifstücks angeordnet ist.

14. Regelsystem nach Anspruch 13,
**dadurch gekennzeichnet,**
**dass** ein unidirektionales Faserbündel in einer vertikalen Bohrung im Schleifstück (14) angeordnet ist, wobei das Faserbündel die Bohrung vollständig ausfüllt.

15. Regelsystem nach einem der Ansprüche 10 bis 14,
**dadurch gekennzeichnet,**
**dass** die Fahrtmesseinrichtung (22) unabhängig von der Windmesseinrichtung (21) ausgebildet ist.

16. Regelsystem nach einem der Ansprüche 10 bis 14,
**dadurch gekennzeichnet,**
**dass** die Windmesseinrichtung (21) die Fahrtmesseinrichtung (22) ausbildet.

## Claims

1. A method for controlling a contact pressing force (F_{A}) of a collector shoe (14) of a current collector (10) of a railway vehicle, the collector shoe disposed on a positioning device (13) of the current collector being brought into contact with a contact line (16) by means of said positioning device of the current collector using the contact pressing force (F_{A}), a travelling speed (vF) of the railway vehicle being determined by means of a travelling speed measuring means (22) of a measuring device of a control system (18) of the railway vehicle, the contact pressing force (F_{A}) being controlled as a function of the travelling speed (vF) by means of a control device (19) of the control system, a true wind speed (vW_{R}) being determined relative to the railway vehicle by means of a wind measuring means (21) of the measuring device, the contact pressing force (F_{A}) being controlled by means of the control device taking into account the true wind speed (vW_{R}),
**characterized in that**
a total wind speed (vW_{ges}) is measured at the positioning device (13) by means of the wind measuring means, the travelling speed (vF) corresponding to a relative wind speed (vW_{F}), the true wind speed (vW_{R}) being determined as the difference of the total wind speed (vW_{ges}) and the travelling speed (vF) or the relative wind speed (vW_{F}).

2. The method according to claim 1,
**characterized in that**
the contact pressing force (F_{A}) is controlled proportionally to the travelling speed (vF).

3. The method according to claim 1 or 2,
**characterized in that**
a relative wind speed force component (F_{WFY}) is determined as a function of the travelling speed (vF) or a relative wind speed (vW_{F}) and/or a true wind speed force component (F_{WRY}) is determined as a function of the true wind speed (vW_{R}) by means of the control device (19).

4. The method according to claim 3,
**characterized in that**
the contact pressing force (F_{A}) is the sum of the negative true wind speed force component (F_{WRY}) and the travelling speed force component (F_{AvK}), the travelling speed force component (F_{AvK}) being controlled by means of the control device (19).

5. The method according to claim 3,
**characterized in that**
the contact pressing force (F_{A}) is the sum of the relative wind speed force component (F_{WFY}), the negative true wind speed force component (F_{WRY}) and the travelling speed force component (F_{AvK}), the travelling speed force component (F_{AvK}) being controlled by means of the control device (19).

6. The method according to any one of claims 3 to 5,
**characterized in that**
the relative wind speed force component (F_{WFY}) and the travelling speed force component (F_{AvK}) are determined by means of the control device (19) taking into account a height of the collector shoe.

7. The method according to any one of claims 3 to 6,
**characterized in that**
a function of values of the true wind speed (vW_{R}) and values of the true wind speed force component (F_{WRY}) is stored by means of a storage means of the control device (19).

8. The method according to claim 7,
**characterized in that**
a calibration of the function is carried out by measuring the contact pressing force (F_{A}) and a total wind speed (vW_{ges}).

9. The method according to any one of the preceding claims,
**characterized in that**
a height of the collector shoe (14) is continuously measured by means of a height measuring means (23) of the measuring device, the contact pressing force (F_{A}) being controlled by means of the control device (19) taking into account the height.

10. A control system for a current collector (10) for railway vehicles, the current collector having a movable positioning device (13) and at least one collector shoe (14) disposed on said positioning device, the collector shoe being able to be brought into contact with a contact line (16) by means of the positioning device using a contact pressing force (F_{A}), the control system comprising a measuring device and a control device (19), the measuring device having a travelling speed measuring means (22) for determining a travelling speed (vF) of a railway vehicle, the contact pressing force (F_{A}) being controllable as a function of the travelling speed (vF) by means of the control device, the measuring device having a wind measuring means (21) for determining a true wind speed (vW_{R}) relative to the railway vehicle, the contact pressing force (F_{A}) being controllable by means of the control device taking into account the true wind speed (vW_{R}),
**characterized in that**
a total wind speed (vW_{ges}) is measurable at the positioning device (13) by means of the wind measuring means, the travelling speed (vF) corresponding to a relative wind speed (vW_{F}), the true wind speed (vW_{R}) being determinable as the difference of the total wind speed (vW_{ges}) and the travelling speed (vF) or the relative wind speed (vW_{F}).

11. The control system according to claim 10,
**characterized in that**
the wind measuring means (21) is a Venturi tube, a pitot tube, a Prandtl tube or an anemometer, in particular an ultrasonic anemometer, a thermoelectric anemometer, a thermos-optic anemometer or a plate anemometer.

12. The control system according to claim 10 or 11,
**characterized in that**
the wind measuring means (21) has a fiber-optic sensor (24) for air speed measurement.

13. The control system according to any one of claims 10 to 12,
**characterized in that**
the measuring device has a height measuring means (23) by means of which a height of the collector shoe (14) is measurable, the height measuring means having a fiber-optic sensor which is disposed inside the collector shoe.

14. The control system according to claim 13,
**characterized in that**
an unidirectional fiber bundle is disposed in a vertical drill hole in the collector shoe (14), the fiber bundle filling the drill hole completely.

15. The control system according to any one of claims 10 to 14,
**characterized in that**
the travelling speed measuring means (22) is realized independently of the wind measuring means (21).

16. The control system according to any one of claims 10 to 14,
**characterized in that**
the wind measuring means (21) realizes the travelling speed measuring means (22).

## Revendications

1. Procédé pour régler une force de pression (F_{A}) d'un frotteur (14) d'un appareil (10) de prise de courant d'un véhicule ferroviaire, le frotteur disposé sur un dispositif de positionnement (13) de l'appareil de prise de courant étant mis en contact avec une ligne de contact (16) au moyen dudit dispositif de positionnement de l'appareil de prise de courant utilisant la force de pression (F_{A}), une vitesse de translation (vF) du véhicule ferroviaire étant déterminée au moyen d'un moyen (22) de mesure de la vitesse de translation d'un dispositif de mesure d'un système de régulation (18) du véhicule ferroviaire, la force de pression (F_{A}) étant réglée en fonction de la vitesse de translation (vF) au moyen d'un dispositif de régulation (19) du système de régulation, une vitesse (vW_{R}) réelle du vent étant déterminée par rapport au véhicule ferroviaire au moyen d'un moyen (21) de mesure du vent du dispositif de mesure, la force de pression (F_{A}) étant réglée au moyen du dispositif de régulation en tenant compte de la vitesse (vW_{R}) réelle du vent,
**caractérisé en ce**
**qu'**une vitesse (vW_{ges}) du vent total est mesurée au dispositif de positionnement (13) au moyen du moyen de mesure du vent, la vitesse de translation (vF) correspondant à une vitesse (vW_{F}) du vent-vitesse, la vitesse (vW_{R}) réelle du vent étant déterminée comme la différence de la vitesse (vW_{ges}) du vent total et la vitesse de translation (vF) ou la vitesse (vW_{F}) du vent-vitesse.

2. Procédé selon la revendication 1,
**caractérisé en ce que**
la force de pression (F_{A}) est réglée proportionnellement à la vitesse de translation (vF).

3. Procédé selon la revendication 1 ou 2,
**caractérisé en ce**
**qu'**une composante de force (F_{WFY}) de la vitesse du vent-vitesse est déterminée en fonction de la vitesse de translation (vF) ou d'une vitesse (vW_{F}) du vent-vitesse et/ou qu'une composante de force (F_{WRY}) de la vitesse du vent réel est déterminée en fonction de la vitesse (vW_{R}) réelle du vent au moyen du dispositif de régulation (19).

4. Procédé selon la revendication 3,
**caractérisé en ce que**
la force de pression (F_{A}) est la somme de la composante de force (F_{WRY}) de la vitesse négative du vent réel et la composante de force (F_{AvK}) de la vitesse de translation, la composante de force (F_{AvK}) de la vitesse de translation étant réglée au moyen du dispositif de régulation (19).

5. Procédé selon la revendication 3,
**caractérisé en ce que**
la force de pression (F_{A}) est la somme de la composante de force (F_{WFY}) de la vitesse du vent-vitesse, la composante de force (F_{WRY}) de la vitesse négative du vent réel et la composante de force (F_{AvK}) de la vitesse de translation, la composante de force (F_{AvK}) de la vitesse de translation étant réglée au moyen du dispositif de régulation (19).

6. Procédé selon l'une quelconque des revendications 3 à 5,
**caractérisé en ce que**
la composante de force (F_{WFY}) de la vitesse du vent-vitesse et la composante de force (F_{AvK}) de la vitesse de translation sont déterminées au moyen du dispositif de régulation (19) en tenant compte d'une hauteur du frotteur.

7. Procédé selon l'une quelconque des revendications 3 à 6,
**caractérisé en ce**
**qu'**une fonction de valeurs de la vitesse (vW_{R}) réelle du vent et de valeurs de la composante de force (F_{WRY}) de la vitesse du vent réel est mémorisée au moyen d'un moyen de mémoire du dispositif de régulation (19).

8. Procédé selon la revendication 7,
**caractérisé en ce**
**qu'**un étalonnage de la fonction est effectué en mesurant la force de pression (F_{A}) et une vitesse (vW_{ges}) du vent total.

9. Procédé selon l'une quelconque des revendications précédentes,
**caractérisé en ce**
**qu'**une hauteur du frotteur (14) est mesurée en continu au moyen d'un moyen (23) de mesure de la hauteur, la force de pression (F_{A}) étant réglée au moyen du dispositif de régulation (19) en tenant compte de la hauteur.

10. Système de régulation pour un appareil (10) de prise de courant pour des véhicules ferroviaires, l'appareil de prise de courant ayant un dispositif de positionnement (13) mobil et au moins un frotteur (14) disposé sur ledit dispositif de positionnement, le frotteur étant capable d'être mis en contact avec une ligne de contact (16) au moyen du dispositif de positionnement utilisant une force de pression (F_{A}), le système de régulation comprenant un dispositif de mesure et un dispositif de régulation (19), le dispositif de mesure ayant un moyen (22) de mesure de la vitesse de translation pour déterminer une vitesse de translation (vF) d'un véhicule ferroviaire, la force de pression (F_{A}) étant réglable en fonction de la vitesse de translation (vF) au moyen du dispositif de régulation, le dispositif de mesure ayant un moyen (21) de mesure du vent pour déterminer une vitesse (vW_{R}) réelle du vent par rapport au véhicule ferroviaire, la force de pression (F_{A}) étant réglable au moyen du dispositif de régulation en tenant compte de la vitesse (vW_{R}) réelle du vent,
**caractérisé en ce**
**qu'**une vitesse (vW_{ges}) du vent total est mesurable au dispositif de positionnement (13) au moyen du moyen de mesure du vent, la vitesse de translation (vF) correspondant à une vitesse (vW_{F}) du vent-vitesse, la vitesse (vW_{R}) réelle du vent étant déterminable comme la différence de la vitesse (vW_{ges}) du vent total et la vitesse de translation (vF) ou la vitesse (vW_{F}) du vent-vitesse.

11. Système de régulation selon la revendication 10,
**caractérisé en ce que**
le moyen (21) de mesure du vent est un tube de Venturi, un tube de Pitot, un tube de Prandtl ou un anémomètre, notamment un anémomètre à ultrason, un anémomètre thermoélectrique, un anémomètre thermo-optique ou un anémomètre à plaque.

12. Système de régulation selon la revendication 10 ou 11,
**caractérisé en ce que**
le moyen (21) de mesure du vent a un capteur (24) à fibre optique pour la mesure de la vitesse d'air.

13. Système de régulation selon l'une quelconque des revendications 10 à 12,
**caractérisé en ce que**
le dispositif de mesure a un moyen (23) de mesure de la hauteur au moyen duquel une hauteur du frotteur (14) est mesurable, le moyen de mesure de la hauteur ayant un capteur à fibre optique qui est disposé à l'intérieur du frotteur.

14. Système de régulation selon la revendication 13,
**caractérisé en ce**
**qu'**un faisceau de fibres unidirectionnel est disposé dans un trou de forage vertical dans le frotteur (14), le faisceau de fibres remplissant complètement le trou de forage.

15. Système de régulation selon l'une quelconque des revendications 10 à 14,
**caractérisé en ce que**
le moyen (22) de mesure de la vitesse de translation est réalisé indépendamment du moyen (21) de mesure du vent.

16. Système de régulation selon l'une quelconque des revendications 10 à 14,
**caractérisé en ce que**
le moyen (21) de mesure du vent réalise le moyen (22) de mesure de la vitesse de translation.
